# EUROPÄISCHE PATENTSCHRIFT

(11) **EP 1 886 199 B1**
(45) Veröffentlichungstag und Bekanntmachung des Hinweises auf die Patenterteilung: **07.01.2009**
(21) Anmeldenummer: 06763341.2
(22) Anmeldetag: 29.05.2006
(51) Int. Cl.: G05B 19/418, G05B 23/02

(54) **BETRIEBSVERFAHREN FÜR EINE AUSWERTUNGSEINRICHTUNG FÜR EINE PRODUKTIONSMASCHINE**
OPERATING METHOD FOR AN EVALUATION DEVICE FOR A PRODUCTION MACHINE
PROCEDE POUR FAIRE FONCTIONNER UN DISPOSITIF D'EVALUATION POUR UNE MACHINE DE PRODUCTION

(30) Priorität: 03.06.2005 DE 102005025673
(43) Veröffentlichungstag der Anmeldung: 13.02.2008
(73) Patentinhaber: SIEMENS AKTIENGESELLSCHAFT, 80333 München (DE)
(72) Erfinder: KAEVER, Michael, 91056 Erlangen (DE); MAIER, Volker, 73760 Ostfildern (DE)
(86) Internationale Anmeldenummer: PCT/EP2006/062684
(87) Internationale Veröffentlichungsnummer: WO 2006/128848

(56) Entgegenhaltungen:
- WO-A-03/073186
- DE-A1- 10 124 132
- US-A1- 2002 156 542

## Beschreibung

Die vorliegende Erfindung betrifft ein Betriebsverfahren für eine Auswertungseinrichtung für eine Produktionsmaschine, insbesondere eine Werkzeugmaschine, die unter Kontrolle einer Steuereinrichtung ein Produkt herstellt.

Derartige Produktionsmaschinen sind allgemein bekannt. Zu ihnen gehören die unterschiedlichsten Fertigungsmaschinen, unter anderem auch Werkzeugmaschinen. Von diesen Produktionsmaschinen werden unter Kontrolle der Steuereinrichtung Produkte hergestellt. Sie weisen eine Vielzahl mechanischer, elektrischer, hydraulischer usw. Komponenten auf.

Auf Grund der Vielzahl von Komponenten besteht ein Problem beim Betrieb derartiger Produktionsmaschinen darin, rechtzeitig vorhersagen zu können, wann welche Komponente ausgetauscht oder gewartet werden muss. Derartige Vorhersagen sind heutzutage noch sehr schwierig und ungenau. Beispielsweise hängt die Erfassung und Auswertung der Rohdaten von Betriebszuständen ab. Weiterhin liegen oftmals nur wenige unterschiedliche Informationen vor. Ein weiteres Problem kann darin bestehen, dass die Rohdaten nur indirekt für die Vorhersage der zu überwachenden Komponente geeignet sind. Beispielsweise werden Ströme von Antrieben verwendet, um daraus auf Achslagerschäden zu schließen. Auch sind die Rohdatenauswertungen oftmals nicht hochwertig genug, da Zusatzinformationen in der Auswertung nicht genutzt werden können.

Im Stand der Technik beruht die Schadensvorhersage und Schadensbegutachtung daher überwiegend auf dem Erfahrungswissen eines Servicetechnikers. Daher wird auch regelmäßig zu früh ein Komponentenwechsel durchgeführt, damit unvorhergesehene Stillstandzeiten vermieden werden können. Auch werden z. B. Wartungsintervalle kürzer gewählt, als dies technisch tatsächlich möglich wäre.

Aus der DE 101 24 132 A1 ist eine Erfassung von Produktionszuständen bekannt. Hierbei soll eine vereinheitlichende Darstellung von Produktionszuständen für Maschinen unterschiedlicher Hersteller ermöglicht werden.

Die Aufgabe der vorliegenden Erfindung besteht darin, eine Möglichkeit zu schaffen, mittels derer Verschleißzustände von Komponenten der Produktionsmaschine zuverlässiger als bisher ermittelbar sind und/oder Ausfälle von Komponenten der Produktionsmaschine zuverlässiger als bisher vorhersagbar sind und/oder im Falle eines Ausfalls Schadensursachen zuverlässiger als bisher diagnostizierbar sind.

Die Aufgabe wird verfahrenstechnisch durch ein Betriebsverfahren für eine Auswertungseinrichtung für eine Produktionsmaschine gelöst,
- wobei die Auswertungseinrichtung während des Herstellens des Produkts durch die Produktionsmaschine von Sensoren zu Erfassungszeitpunkten erfasste Istzustände von Komponenten der Produktionsmaschine und/oder zu den Erfassungszeitpunkten bestehende Betriebszustände der Steuereinrichtung entgegen nimmt,
- wobei die Auswertungseinrichtung die ihr zugeführten Zustände jedes Erfassungszeitpunkts mit vordefinierten Zustandskombinationen vergleicht und so erfüllte Zustandskombinationen ermittelt,
- wobei die Auswertungseinrichtung für jede erfüllte Zustandskombination aus den ihr zugeführten Zuständen des jeweiligen Erfassungszeitpunkts relevante Zustände heraus greift und mit den relevanten Zuständen dieses Erfassungszeitpunkts korrespondierende Informationen sowie den jeweiligen Erfassungszeitpunkt abspeichert, so dass sie für weitere Auswertungen zur Verfügung stehen.

Somit ist es insbesondere möglich, dass die Auswertungseinrichtung zunächst ermittelt, überhaupt die Voraussetzungen für bestimmte Auswertungen vorliegen (= vordefinierte Zustandskombinationen). Nur wenn die Voraussetzungen vorliegen, werden dann gegebenenfalls auch die entsprechenden Informationen gespeichert.

Datentechnisch wird die Aufgabe durch einen Datenträger mit einem auf dem Datenträger gespeicherten Computerprogramm für eine Auswertungseinrichtung zur Durchführung eines derartigen Betriebsverfahrens gelöst.

Vorrichtungstechnisch wird die Aufgabe durch eine Produktionsmaschine mit Komponenten, einer Steuereinrichtung und einer Auswertungseinrichtung gelöst, wobei die Komponenten, die Steuereinrichtung und die Auswertungseinrichtung derart datentechnisch miteinander verbunden sind, dass von der Steuereinrichtung die Produktionsmaschine derart steuerbar ist, dass mit der Produktionsmaschine ein Produkt herstellbar ist, und von der Auswertungseinrichtung während des Herstellens des Produkts durch die Produktionsmaschine ein solches Betriebsverfahren durchführbar ist.

Wenn die korrespondierenden Informationen die zum jeweiligen Erfassungszeitpunkt erfassten relevanten Zustände selbst umfassen, ist die Ermittlung der korrespondierenden Informationen besonders einfach. Ferner steht in diesem Fall unmittelbar die Historie der Produktionsmaschine separat für jede vordefinierte Zustandskombination zur Auswertung zur Verfügung.

Alternativ oder zusätzlich ist es auch möglich, dass die Auswertungseinrichtung eine Vorauswertung der zum jeweiligen Erfassungszeitpunkt erfassten relevanten Zustände durchführt und die korrespondierenden Informationen die im Rahmen der Vorauswertung ermittelten Vorauswertungsergebnisse umfassen. In diesem Fall sind nicht nur die relevanten Zustände selbst, sondern bereits aus diesen abgeleitete (= vorausgewertete) Informationen vorhanden, so dass die weitere Auswertung einfacher, schneller und komfortabler durchgeführt werden kann. Vorzugsweise ermittelt die Auswertungseinrichtung die Vorauswertungsergebnisse dabei ausschließlich anhand von zum jeweiligen Erfassungszeitpunkt erfassten relevanten Zuständen.

Wenn die Auswertungseinrichtung im Rahmen der weiteren Auswertungen anhand der mit den relevanten Zuständen korrespondierenden Informationen Endauswertungsergebnisse ermittelt, können von der Auswertungseinrichtung weitere Reaktionen ergriffen werden. Beispielsweise können Ausfallwahrscheinlichkeiten, wahrscheinliche Fehlerursachen, Restlebensdauern usw. ermittelt werden.

Die Zusatzinformationen können zu mindestens einem anderen Erfassungszeitpunkt erfasste Istzustände der Komponenten der Produktionsmaschine und/oder zu mindestens einem anderen Erfassungszeitpunkt erfasste Betriebszustände der Steuereinrichtung umfassen. Damit sind beispielsweise Trends oder zeitliche Verläufe ermittelbar.

Alternativ oder zusätzlich können die Zusatzinformationen auch statische Informationen über die Produktionsmaschine umfassen, beispielsweise Erfahrungswerte von einer Vielzahl baugleicher Produktionsmaschinen.

Die Auswertungseinrichtung vergleicht die Endauswertungsergebnisse vorzugsweise mit vordefinierten Referenzergebnissen. Referenzergebnisse können z. B. die aufgezeichneten Ergebnisse mindestens einer vorherigen Bearbeitung oder die Ergebnisse eines entsprechenden Modells der Produktionsmaschine bzw. des Produktionsprozesses sein.

Für jedes Endauswertungsergebnis, das einem der Referenzergebnisse entspricht, werden in diesem Fall
- an einen Bediener der Produktionsmaschine eine mit dem jeweiligen Referenzergebnis korrespondierende Meldung ausgegeben, so dass dieser sie mit seinen Sinnesorganen unmittelbar wahrnehmen kann,
- an die Steuereinrichtung Steuerinformationen ausgegeben, so dass diese die Produktionsmaschine in Abhängigkeit von den übermittelten Steuerinformationen ansteuern kann, und/oder
- über eine Rechner-Rechner-Verbindung an einen entfernten Rechner Informationen übermittelt.

Denn in diesem Fall ist der Betrieb der Auswertungseinrichtung für den Bediener besonders komfortabel. Die an den Bediener ausgegebenen Meldungen können beispielsweise Wartungsanforderungen oder Hinweise über wahrscheinliche Fehlerursachen sein. Die an den entfernten Rechner übermittelten Informationen können die gleichen Informationen oder z. B. Bestelldaten sein.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:
- FIG 1: einen prinzipiellen Aufbau einer Produktionsmaschine und
- FIG 2 und 3: Ablaufdiagramme.

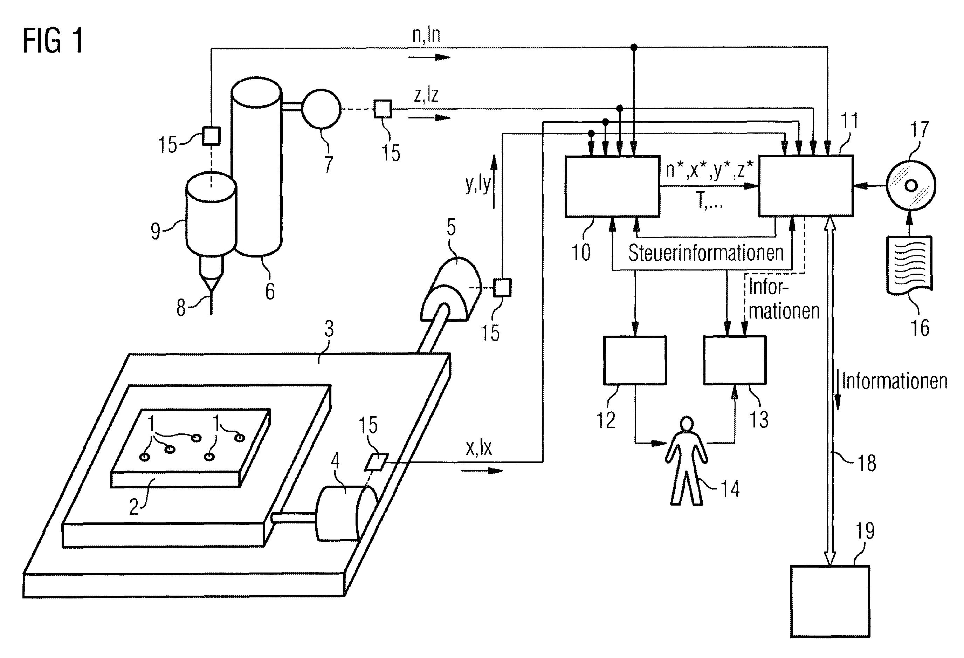

FIG 1 zeigt als Beispiel einer Produktionsmaschine eine einfache Werkzeugmaschine, nämlich eine Bohrmaschine. Mittels der Bohrmaschine werden beispielsweise Bohrlöcher 1 in ein Werkstück 2 eingebracht. Das Einbringen der Bohrlöcher 1 in das Werkstück 2 entspricht dem Herstellen (bzw. Bearbeiten) des Produkts 2.

Zu diesem Zweck ist - rein beispielhaft - das Werkstück 2 auf einem Werkstückhalter 3 angeordnet, der über Antriebe 4, 5 in einer xy-Ebene positionierbar ist. Eine Bohrvorrichtung 6 weist einen Bohrantrieb 7 auf, mittels dessen ein Bohrer 8 auf das Werkstück 2 absenkbar und von diesem abhebbar ist. Weiterhin ist selbstverständlich ein Drehantrieb 9 zum Drehen des Bohrers 8 vorhanden. Nicht mit dargestellt sind in FIG 1 beispielsweise Greifer zum Zuführen und Abführen des Werkstücks 2 und Werkzeugwechsler zum Wechseln des Bohrers 8.

Die verschiedenen Antriebe 4, 5, 7, 9 der Bohrmaschine werden von einer Steuereinrichtung 10 gesteuert. Die Bohrmaschine stellt das Werkstück 2 also unter Kontrolle der Steuereinrichtung 10 her. Die Steuereinrichtung 10 ist zu diesem Zweck mit einem Computerprogramm programmiert, das im Rahmen der vorliegenden Erfindung aber nicht von Bedeutung ist.

Weiterhin sind eine Auswertungseinrichtung 11, ein Sichtgerät 12 und eine Eingabeeinrichtung 13 vorhanden. Die Auswertungseinrichtung 11 und die Steuereinrichtung 10 sind mit dem Sichtgerät 12 und der Eingabeeinrichtung 13 verbunden, so dass sowohl die Steuereinrichtung 10 als auch die Auswertungseinrichtung 11 mit einem Bediener 14 der Bohrmaschine kommunizieren können. Gegebenenfalls können die Steuereinrichtung 10 und die Auswertungseinrichtung 11 auch zu einer Einheit zusammen gefasst sein.

Die Steuereinrichtung 10 ist mit den Antrieben 4, 5, 7, 9 der Bohrmaschine und den übrigen Komponenten der Bohrmaschine verbunden, um diese zu steuern. Der Begriff "Steuereinrichtung" ist dabei umfassend zu verstehen. Er umfasst beispielsweise auch die unterlagerte Antriebsregelung der Antriebe 4, 5, 7, 9. Die Auswertungseinrichtung 11 wiederum ist mit den Antrieben 4, 5, 7, 9 der Bohrmaschine und mit der Steuereinrichtung 10 verbunden, so dass sie von diesen Zustände entgegen nehmen kann. Bei den Komponenten 4, 5, 7, 9 sind dies Istzustände, die von den Komponenten 4, 5, 7, 9 zugeordneten Sensoren 15 erfasst werden.

Die Auswertungseinrichtung 11 führt während des Herstellens bzw. Bearbeitens des Werkstücks 2 ein Betriebsverfahren aus. Das Betriebsverfahren ist dabei durch ein Computerprogramm 16 festgelegt, das der Auswertungseinrichtung 11 über einen Datenträger 17 zugeführt wird, auf dem das Computerprogramm 16 gespeichert ist. Beispiele eines derartigen Datenträgers 17 sind eine CD-ROM 17 (wie dargestellt) oder ein USB-Memory-Stick.

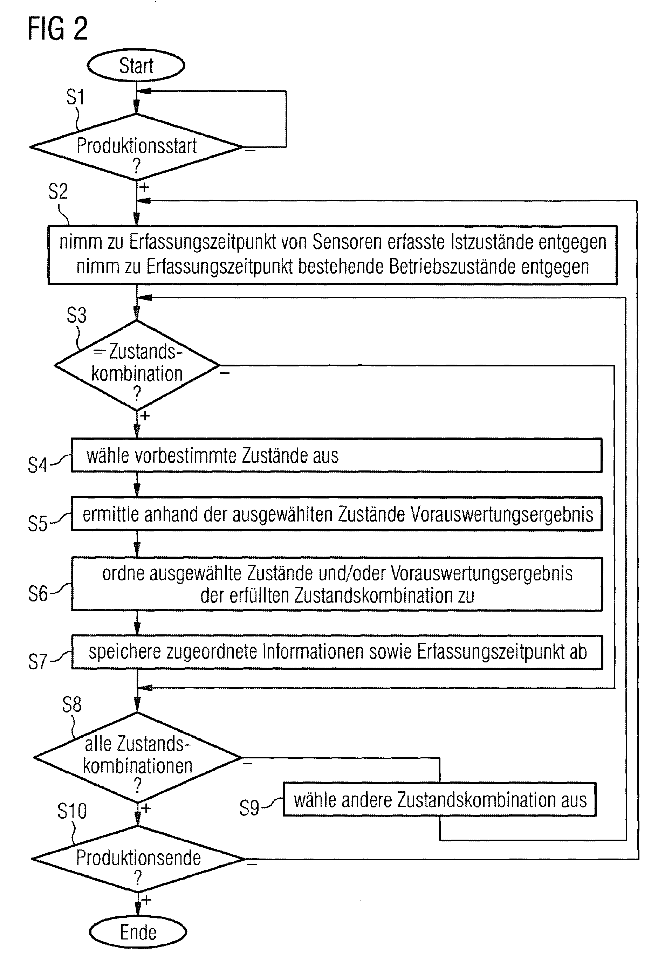

Gemäß FIG 2 wartet die Auswertungseinrichtung 11 in einem Schritt S1 zunächst den Start der Produktionsmaschine ab. Die Auswerteeinrichtung 11 führt den Schritt S1 dabei wiederholt aus, bis ihr von der Steuereinrichtung 10 eine entsprechende Meldung übermittelt wird.

Nach Beginn der Produktionsaufnahme nimmt die Auswertungseinrichtung 11 in einem Schritt S2 zu Erfassungszeitpunkten ti Istzustände und Betriebszustände entgegen. Die Istzustände sind dabei von den Sensoren 15 erfasste Istzustände der Komponenten 4, 5, 7, 9. Beispielsweise können für die Antriebe 4, 5 und 7 die momentanen Istpositionen x, y, z und die momentanen Antriebsströme Ix, Iy, Iz erfasst werden. Bezüglich des Drehantriebs 9 können beispielsweise die momentane Drehzahl n und der korrespondierende Antriebsstrom In erfasst werden. Gegebenenfalls können auch Vorverarbeitungen dieser Signale x, y, z, n, Ix, Iy, Iz, In erfolgen. Die Betriebszustände sind Betriebszustände der Steuereinrichtung 10. Sie umfassen beispielsweise die Sollpositionen x*, y*, z* und die Solldrehzahl n* der Antriebe 4, 5, 7, 9. Sie können auch andere Größen umfassen wie beispielsweise eine Temperatur T, den momentanen Bearbeitungszustand wie beispielsweise Werkstückbearbeitung, Werkstücktransport oder Werkstückwechsel oder auch andere Angaben.

In einem Schritt S3 vergleicht die Auswertungseinrichtung 11 die von ihr entgegen genommenen Zustände mit vordefinierten Zustandskombinationen. Beispielsweise kann überprüft werden, ob die Drehzahl n des Drehantriebs 9 in einem vorbestimmten Drehzahlbereich liegt oder ob die Änderung einer der Istpositionen x, y, z in einem vorbestimmten Bereich liegt oder ob beispielsweise gerade ein Werkzeugwechsel durchgeführt wird.

Wenn die vordefinierte Zustandskombination erfüllt ist, fährt die Auswertungseinrichtung 11 mit Schritten S4 bis S7 fort. Anderenfalls geht sie direkt zu einem Schritt S8 über.

Im Schritt S4 wählt die Steuereinrichtung 11 vorbestimmte der ihr zugeführten Zustände aus. Wenn sich auf Grund der Istposition z des Bohrers 8 beispielsweise ergibt, dass dieser gerade nicht auf das Werkstück 2 einwirkt und die Drehzahl n des Drehantriebs 9 in einem vorbestimmten Drehzahlbereich liegt, so ist insbesondere der vom Drehantrieb 9 aufgenommene Antriebsstrom In von Bedeutung.

Im Schritt S5, der optional ausgeführt wird, führt die Auswertungseinrichtung 11 eine Vorauswertung der zum jeweiligen Erfassungszeitpunkt ti erfassten relevanten Zustände (gemäß dem Beispiel: des Antriebsstroms In) durch. Anhand dieser Vorauswertung ermittelt die Auswertungseinrichtung 11 im Schritt S5 ein Vorauswertungsergebnis. Das Vorauswertungsergebnis ermittelt die Auswertungseinrichtung 11 dabei vorzugsweise ausschließlich anhand von Zuständen, die zum Einen zum jeweiligen Erfassungszeitpunkt ti erfasst worden sind und zum Anderen als relevant herausgegriffen worden sind.

Im Schritt S6 ordnet die Auswertungseinrichtung 11 die relevanten Zustände selbst (z.B. In) und/oder das im Rahmen des Schrittes S5 ermittelte Vorauswertungsergebnis der jeweiligen Zustandskombination zu. Im Schritt S7 speichert die Auswertungseinrichtung 11 die der jeweiligen Zustandskombination zugeordneten Informationen sowie den korrespondierenden Erfassungszeitpunkt ti vorzugsweise permanent ab, so dass sie für weitere Auswertungen zur Verfügung stehen. Der Begriff "permanent" bedeutet dabei im Rahmen der vorliegenden Erfindung, dass die abgespeicherten Informationen auch im Falle eines Einbruchs oder eines Abschaltens der Energieversorgung erhalten bleiben. Er bedeutet hingegen nicht, dass die Informationen nie wieder löschbar sind. Im Rahmen der vorliegenden Erfindung fällt also beispielsweise eine Speicherung auf einer Festplatte, in einem batteriegepufferten RAM, in einem EEPROM usw. unter den Begriff "permanent". Es wäre aber auch ein flüchtiges Speichern möglich.

Im Schritt S8 prüft die Auswertungseinrichtung, ob sie die Schritte S3 bis S7 bereits für alle vordefinierten Zustandskombinationen durchgeführt hat. Wenn sie dies noch nicht getan hat, geht sie zu einem Schritt S9 über, in dem sie eine andere, bisher noch nicht geprüfte Zustandskombination auswählt. Danach geht sie zum Schritt S3 zurück. Anderenfalls geht sie zu einem Schritt S10 über.

Im Schritt S10 prüft die Auswertungseinrichtung 11, ob ihr von der Steuereinrichtung 10 eine Information übermittelt worden ist, dass die Produktionsmaschine das Bearbeiten von Werkstücken 2 beendet hat. Wenn dies nicht der Fall ist, geht die Steuereinrichtung 11 zum Schritt S2 zurück. Anderenfalls ist der Grundbetrieb der Auswertungseinrichtung 11 beendet.

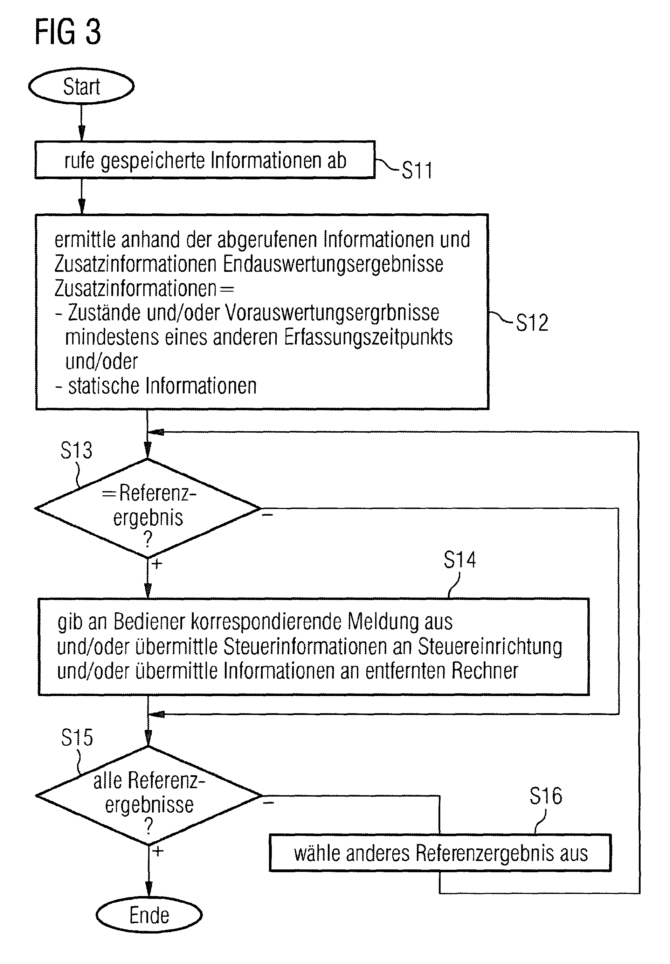

FIG 3 zeigt nun weitere Auswertungen, die durchgeführt werden können. Die weiteren Auswertungen können dabei von der Auswertungseinrichtung 11 oder - nach Auslesen der gespeicherten Informationen - von einer anderen Einrichtung ausgeführt werden. Sie können parallel zur Vorgehensweise gemäß FIG 2 durchgeführt werden, sei es mit dem gleichen Takt, in vorbestimmten Zeitabständen (z.B. einmal pro Stunde) oder nur auf eine entsprechende Anforderung des Bedieners 14 hin.

Gemäß FIG 3 ruft die Auswertungseinrichtung 11 in einem Schritt S11 die gespeicherten Informationen (z.B. In) ab. In einem Schritt S12 ermittelt die Auswertungseinrichtung 11 dann anhand der gespeicherten Informationen und Zusatzinformationen Endauswertungsergebnisse. Die Zusatzinformationen können dabei beispielsweise Istzustände der Komponenten 4, 5, 7, 9 der Produktionsmaschine und/oder Betriebszustände der Steuereinrichtung 10 umfassen, die zu einem anderen als dem jeweiligen Erfassungszeitpunkt ti erfasst wurden. Alternativ oder zusätzlich können die Zusatzinformationen auch statische Informationen über die Produktionsmaschine umfassen, beispielsweise die konkrete Konfiguration der Produktionsmaschine oder anhand von Datenbanken ermittelte Vorhersagen.

In einem Schritt S13 vergleicht die Auswertungseinrichtung 11 die Endauswertungsergebnisse mit einem vordefinierten Referenzergebnis. Wenn das Endauswertungsergebnis dem Referenzergebnis entspricht, gibt die Auswertungseinrichtung 11 in einem Schritt S14 an den Bediener 14 der Produktionsmaschine eine korrespondierende Meldung aus. Die Ausgabe erfolgt dabei vorzugsweise über das Sichtgerät 12. Es sind aber auch andere Ausgabeformen möglich, wenn gewährleistet ist, dass der Bediener 14 die Meldung mit seinen Sinnesorganen unmittelbar wahrnehmen kann. Alternativ oder zusätzlich könnten auch an die Steuereinrichtung 10 Steuerinformationen und/oder über eine Rechner-Rechner-Verbindung 18 an einen entfernten Rechner 19 Informationen übermittelt werden.

In einem Schritt S15 prüft die Auswertungseinrichtung 11, ob sie die Schritte S13 und S14 bereits für alle vordefinierten Referenzergebnisse durchgeführt hat. Wenn dies nicht der Fall ist, selektiert die Auswerteeinrichtung 11 in einem Schritt S16 ein anderes vordefiniertes Referenzergebnis und geht zum Schritt S13 zurück. Anderenfalls ist auch die Ermittlung der Endauswertungsergebnisse beendet.

Mittels der erfindungsgemäßen Vorgehensweise ist daher eine erheblich komfortablere Vorhersage über das zukünftige Verhalten der Produktionsmaschine möglich. Auch ist im Falle eines Fehlers mit erheblich größerer Wahrscheinlichkeit eine Vorhersage über den aufgetretenen Fehler möglich.

## Patentansprüche

1. Betriebsverfahren für eine Auswertungseinrichtung (11) für eine Produktionsmaschine, insbesondere eine Werkzeugmaschine, die unter Kontrolle einer Steuereinrichtung (10) ein Produkt (2) herstellt,
- wobei die Auswertungseinrichtung (11) während des Herstellens des Produkts (2) durch die Produktionsmaschine von Sensoren (15) zu Erfassungszeitpunkten (ti) erfasste Istzustände (x,y,z,n,Ix,Iy,Iz, In) von Komponenten (4,5,7, 9) der Produktionsmaschine und/oder zu den Erfassungszeitpunkten (ti) bestehende Betriebszustände (x*,y*,z*,n*) der Steuereinrichtung (10) entgegen nimmt,
**dadurch gekennzeichnet, dass**
- die Auswertungseinrichtung (11) die ihr zugeführten Zustände (x,y,z,n,x*,y*,z*,n*,Ix,Iy,Iz, In) jedes Erfassungszeitpunkts (ti) mit vordefinierten Zustandskombinationen vergleicht und so erfüllte Zustandskombinationen ermittelt,
- die Auswertungseinrichtung (11) für jede erfüllte Zustandskombination aus den ihr zugeführten Zuständen (x,y, z,n,x*,y*,z*,n*,Ix,Iy,Iz,In) des jeweiligen Erfassungszeitpunkts (ti) relevante Zustände (z.B. In) herausgreift und mit den relevanten Zuständen (z.B. In) dieses Erfassungszeitpunkts (ti) korrespondierende Informationen sowie den jeweiligen Erfassungszeitpunkt (ti) speichert, so dass sie für weitere Auswertungen zur Verfügung stehen.

2. Betriebsverfahren nach Anspruch 1, **dadurch gekennzeichnet, dass** die korrespondierenden Informationen die zum jeweiligen Erfassungszeitpunkt (ti) erfassten relevanten Zustände (z.B. In) selbst umfassen.

3. Betriebsverfahren nach Anspruch 1 oder 2, **dadurch gekennzeichnet, dass** die Auswertungseinrichtung (11) eine Vorauswertung der zum jeweiligen Erfassungszeitpunkt (ti) erfassten relevanten Zustände (z.B. In) durchführt und dass die korrespondierenden Informationen die im Rahmen der Vorauswertung ermittelten Vorauswertungsergebnisse umfassen.

4. Betriebsverfahren nach Anspruch 3, **dadurch gekennzeichnet, dass** die Auswertungseinrichtung (11) die Vorauswertungsergebnisse ausschließlich anhand von zum jeweiligen Erfassungszeitpunkt (ti) erfassten relevanten Zuständen (z.B. In) ermittelt.

5. Betriebsverfahren nach einem der obigen Ansprüche, **dadurch gekennzeichnet, dass** die Auswertungseinrichtung (11) im Rahmen der weiteren Auswertungen anhand der mit den relevanten Zuständen (z.B. In) korrespondierenden Informationen und Zusatzinformationen Endauswertungsergebnisse ermittelt.

6. Betriebsverfahren nach Anspruch 5, **dadurch gekennzeichnet, dass** die Zusatzinformationen zu mindestens einem anderen Erfassungszeitpunkt (ti) erfasste Istzustände (x,y,z,n,Ix,Iy,Iz, In) der Komponenten (4,5,7,9) der Produktionsmaschine und/oder zu mindestens einem anderen Erfassungszeitpunkt (ti) erfasste Betriebszustände (x*,y*, z*,n*) der Steuereinrichtung (10) umfassen.

7. Betriebsverfahren nach Anspruch 5 oder 6, **dadurch gekennzeichnet, dass** die Zusatzinformationen statische Informationen über die Produktionsmaschine umfassen.

8. Betriebsverfahren nach Anspruch 5, 6 oder 7, **dadurch gekennzeichnet, dass** die Auswertungseinrichtung (11) die Endauswertungsergebnisse mit vordefinierten Referenzergebnissen vergleicht und für jedes Endauswertungsergebnis, das einem der Referenzergebnisse entspricht,
- an einen Bediener (14) der Produktionsmaschine eine mit dem jeweiligen Referenzergebnis korrespondierende Meldung ausgibt, so dass dieser sie mit seinen Sinnesorganen unmittelbar wahrnehmen kann,
- an die Steuereinrichtung (10) Steuerinformationen übermittelt, so dass diese die Produktionsmaschine in Abhängigkeit von den übermittelten Steuerinformationen ansteuern kann, und/oder
- über eine Rechner-Rechner-Verbindung (18) an einen entfernten Rechner (19) Informationen übermittelt.

9. Datenträger mit einem auf dem Datenträger gespeicherten Computerprogramm (16) für eine Auswertungseinrichtung (11) zur Durchführung eines Betriebsverfahrens nach einem der obigen Ansprüche.

## Claims

1. Operating method for an evaluation device (11) for a production machine, especially a machine tool, that manufactures a product (2) under the control of a control device (10),
- with, during the manufacturing of the product (2) by means of the production machine, the evaluation device (11) receiving actual states (x, y, z, n, Ix, Iy, Iz, In) of components (4, 5, 7, 9) of the production machine, detected by sensors (15) at detection times (ti) and/or existing operating states (x*, y*, z*, n*) at the detection times (ti) of the control device (10),
**characterized in that**
- the evaluation device (11) compares the states (x, y, z, n, x*, y*, z*, n*, Ix, Iy, Iz, In) of each detection time (ti) transmitted thereto with pre-defined state combinations and thus determines fulfilled state combinations,
- for each fulfilled state combination, the evaluation device (11) selects relevant states (e.g. In) from the states (x, y, z, n, x*, y*, z*, n*, Ix, Iy, Iz, In) of the respective detection time (ti) transmitted thereto, and corresponding information and the respective detection time (ti) is stored with the relevant states (e.g. In) of said detection time (t1) in such a way that they are available for other evaluation.

2. Operating method according to claim 1, **characterized in that** the corresponding information itself includes the relevant states (e.g. In) detected at the respective detection time (ti).

3. Operating method according to claim 1 or 2, **characterized in that** the evaluation device (11) carries out a pre-evaluation of the relevant states (e.g. In) detected at the respective time (ti) and that the corresponding information includes the pre-evaluation results determined as part of the pre-evaluation.

4. Operating method according to claim 3, **characterized in that** the evaluation device (11) determines the pre-evaluation results exclusively on the basis of relevant states (e.g. In) determined at the respective time (ti).

5. Operating method according to one of the above claims, **characterized in that** the evaluation device (11) determines as part of the further evaluations the final evaluation results on the basis of information corresponding to the relevant states (e.g. In) and additional information.

6. Operating method according to claim 5, **characterized in that** the additional information includes actual states (x, y, z, n, Ix, Iy, Iz, In) of components (4, 5, 7, 9) of the production machine detected at at least one other detection time (ti) and/or operating states (x*, y*, z*, n*) of the control device (10) detected at at least one other detection time (ti).

7. Operating method according to claim 5 or 6, **characterized in that** the additional information includes statistical information on the production machine.

8. Operating method according to claim 5, 6 or 7 **characterized in that** the evaluation device (11) compares the final evaluation results with pre-defined reference results and, for each final evaluation result that corresponds to one of the reference results,
- outputs a message corresponding to the respective reference result to an operator (14) of the production machine so that the operator (14) can perceive it with his sense organs.
- transmits control information to the control device (10) so that the control device (10) can control the production machine relative to the transmitted control information, and/or
- transmits information via a computer-computer connection (18) to a remote computer (19).

9. Data carrier with a computer program (16), stored on the data carrier, for an evaluation device (11) for performing an operating method as claimed in one of the above claims.

## Revendications

1. Procédé pour faire fonctionner un dispositif (11) d'évaluation d'une machine de production notamment d'une machine outil qui, sous le contrôle d'un dispositif (10) de commande, produit un produit (2),
- dans lequel le dispositif (11) d'évaluation accepte pendant la production du produit (2) par la machine de production des états (x, y, z, n, Ix, Iy, Iz, In) de composants (4, 5, 7, 9) de la machine de production relevés par des capteurs à des instants (ti) de relevé et/ou des états (x*, y*, z*, n*) de fonctionnement du dispositif (10) de commande existant aux instants (ti) de détection,
**caractérisé en ce que**
- le dispositif (11) d'évaluation compare les états (x, y, z, n, x*, y*, z*, n*, Ix, Iy, Iz, In) qui lui sont envoyés de chaque instant (ti) de détection à des combinaisons d'états définies à l'avance et détermine ainsi des combinaisons d'état réalisées,
- le dispositif (11) d'évaluation retire, pour chaque combinaison d'état réalisée, des états (x, y, z, n, x*, y*, z*, n*, Ix, Iy, Iz, In) de l'instant (ti) de relevé respectif, qui lui sont envoyés, des états (par exemple In) pertinents et mémorise avec les états (par exemple In) pertinents de cet instant (ti) de relevé des informations correspondantes ainsi que l'instant (ti) de relevé respectif de manière à ce qu'elles soient disponibles pour d'autres évaluations.

2. Procédé pour faire fonctionner un dispositif (11) d'évaluation selon la revendication 1, **caractérisé en ce que** les informations correspondantes comprennent les états (par exemple In) pertinents eux-mêmes, relevés à l'instant (ti) de relevé respectifs.

3. Procédé selon la revendication 1 ou 2, **caractérisé en ce que** le dispositif (11) d'évaluation effectue une évaluation préalable des états (par exemple In) pertinents relevés à l'instant (ti) de relevé respectif et **en ce que** les informations correspondantes comprennent les résultats de l'évaluation préalable déterminée dans le cadre de l'évaluation préalable.

4. Procédé selon la revendication 3, **caractérisé en ce que** le dispositif (11) d'évaluation détermine les résultats de l'évaluation préalable exclusivement aux moyens des états (par exemple In) pertinents relevés à l'instant (ti) de relevé respectif.

5. Procédé selon l'une des revendications précédentes, **caractérisé en ce que** le dispositif (11) d'évaluation détermine des résultats d'évaluation définitif dans le cadre des autres évaluations au moyen des informations correspondant aux états (par exemple In) pertinents et d'informations supplémentaires.

6. Procédé suivant la revendication 5, **caractérisé en ce que** les informations supplémentaires comprennent des états (x, y, z, n, Ix, Iy, Iz, In) des composants (4, 5, 7, 9) de la machine de production relevés au moins à un autre instant (ti) de relevé et/ou des états (x*, y*, z*, n*) de fonctionnement du dispositif (10) de commande relevés à au moins un autre instant (ti) de relevé.

7. Procédé suivant la revendication 5 ou 6, **caractérisé en ce que** les informations supplémentaires comprennent des informations statiques sur la machine de production.

8. Procédé suivant la revendication 5, 6 ou 7, **caractérisé en ce que** le dispositif (11) d'évaluation compare les résultats d'évaluation définitifs à des résultats de référence définis à l'avance et pour chaque résultat d'évaluation qui correspond à l'un des résultats de référence,
- envoie à un opérateur (14) de la machine de production un message correspondant aux résultats de référence respectif de manière à ce qu'il puisse le percevoir directement par ses organes des sens,
- transmet au dispositif (10) de commande des informations de commande de sorte que celui-ci puisse commander la machine de production en fonction des informations de commande transmise et/ou,
- transmet par une liaison (18) ordinateur-ordinateur des informations à un ordinateur (19) éloigné.

9. Support de données comprenant un programme (16) informatique mémorisé sur le support de données pour un dispositif (11) d'évaluation afin de mettre en oeuvre un procédé pour faire fonctionner un dispositif d'évaluation selon l'une des revendications précédentes.
